# EUROPÄISCHE PATENTSCHRIFT

(11) **EP 3 211 141 B1**
(45) Veröffentlichungstag und Bekanntmachung des Hinweises auf die Patenterteilung: **20.04.2022**
(21) Anmeldenummer: 17157910.5
(22) Anmeldetag: 24.02.2017
(51) Int. Cl.: E02F 3/34, E02F 9/08, E02F 9/16, B60N 2/14

(54) **KNICKGELENKTER MULDENKIPPER MIT DREHBAREM FAHRERSITZ**
DUMPER WITH ARTICULATED STEERING AND WITH A ROTATABLE DRIVER SEAT
CAMION BENNE AVEC CHASSIS ARTICULÉ ET POSTE DE CONDUITE RÉVERSIBLE

(30) Priorität: 24.02.2016 DE 202016100964 U
(43) Veröffentlichungstag der Anmeldung: 30.08.2017
(73) Patentinhaber: Wacker Neuson Linz GmbH, 4063 Hörsching (AT)
(72) Erfinder: ERLINGER, Josef, 4173 St. Veit im Mühlkreis (AT)
(74) Vertreter: Müller Hoffmann & Partner

(56) Entgegenhaltungen:
- EP-A1- 0 841 437
- EP-A1- 2 374 654
- DE-A1- 1 430 124
- DE-A1- 1 505 281
- DE-A1- 19 720 336
- DE-U1- 9 314 191
- DE-U1-202006 010 700
- US-A1- 2010 300 796
- US-A1- 2012 224 941

## Beschreibung

Die Erfindung betrifft ein Arbeitsfahrzeug, insbesondere einen Lader wie zum Beispiel einen Dumper oder einen Radlader.

Derartige Arbeitsfahrzeuge sind bekannt. Radlader mit besonderer Beweglichkeit nach dieser Bauart können einen Vorderwagen und einen Hinterwagen aufweisen, sowie ein zwischen dem Vorderwagen und dem Hinterwagen angeordnetes Gelenk zum Koppeln des Hinterwagens mit dem Vorderwagen, derart, dass der Vorderwagen und der Hinterwagen um wenigstens eine Hochachse des Arbeitsfahrzeugs relativ zueinander bewegbar sind. Da somit der Vorderwagen und der Hinterwagen relativ zueinander eine Art "Knickbewegung" machen können, wird in diesem Zusammenhang auch von knickgelenkten Radladern gesprochen. Das Knicken zwischen Vorderwagen und Hinterwagen ermöglicht eine Lenkbewegung und damit Kurvenfahrten, da die an Vorder- und Hinterwagen angeordneten Räder bzw. Radachsen in einen Winkel zueinander gestellt werden können.

Entsprechend sind auch sogenannte Dumper (knickgelenkte kleinere Muldenkipper) bekannt, bei denen eine Fahreinheit (Hinterwagen) mit einer Muldeneinheit (Vorderwagen) über ein Knickgelenk gekoppelt sind, um eine Knickbewegung und damit eine Lenkung zu ermöglichen.

Zur Verbesserung der Geländegängigkeit ist es darüber hinaus bekannt, das Gelenk derart auszubilden, dass es auch eine Relativbewegung zwischen Vorderwagen und Hinterwagen bzw. Fahreinheit und Muldeneinheit um die Längsachse des Arbeitsfahrzeugs zulässt. Diese Relativbewegung wird auch als "Pendeln" bezeichnet. Ein derart kombiniertes Gelenk wird dementsprechend auch als "Knick-Pendel-Gelenk" benannt.

Ein Knick-Pendel-Gelenk ist zum Beispiel aus der DE 101 30 530 C1 oder der EP 2 218 835 A1 bekannt.

Der Aufbau eines Knick-Pendel-Gelenks ist insbesondere in der EP 2 218 835 A1 detailliert beschrieben, so dass sich an dieser Stelle eine Beschreibung im Einzelnen erübrigt.

Bei Dumpern ist auf der Muldeneinheit eine relativ zu dem Fahrgestell der Muldeneinheit nach oben verschwenkbare Mulde vorgesehen, die z.B. zur Aufnahme von losen Schüttgütern, Erde, Geröll etc. dient.

Zum Bedienen der Mulde ist es für den Fahrer des Dumpers zweckmäßig und bequem, wenn er die Mulde direkt von seinem Fahrersitz aus im Blick hat. Diese Blickrichtung kann hingegen beim Verfahren des Dumpers unkomfortabel sein, weil sich die Mulde dann vor dem Fahrer in Fahrtrichtung befindet und so das Sichtfeld einschränkt.

Aus der DE-A1-1505281 ist ein Grubenfahrzeug bekannt, bei dem ein Sitz zusammen mit einem Lenkrad und einem Bedienungspedal in Vorwärts- und in Rückwärtsfahrrichtung verschwenkt werden können. Dieses Dokument offenbart den Oberbegriff des unabhängigen Anspruchs 1.

Der Erfindung liegt die Aufgabe zugrunde, ein Arbeitsfahrzeug anzugeben, das sich sowohl beim Bedienen bzw. Beladen einer von dem Arbeitsfahrzeug getragenen Mulde als auch beim Verfahren des Arbeitsfahrzeugs bequem und einfach bedienen lässt.

Die Aufgabe wird erfindungsgemäß durch ein Arbeitsfahrzeug mit den Merkmalen von Anspruch 1 gelöst. Vorteilhafte Ausgestaltungen der Erfindung sind in den abhängigen Ansprüchen angegeben.

Es wird ein Arbeitsfahrzeug angegeben, mit einer Fahreinheit, die einen Antrieb und einen Fahrersitz aufweist, einer Muldeneinheit, die eine Mulde zum Aufnehmen einer Last aufweist und mit einem zwischen der Fahreinheit und der Muldeneinheit angeordneten Gelenk zum Koppeln der Fahreinheit mit der Muldeneinheit, derart, dass die Fahreinheit und die Muldeneinheit um wenigstens eine Hochachse des Arbeitsfahrzeugs relativ zueinander bewegbar sind. An der Fahreinheit ist eine Drehkonsole vorgesehen, die den Fahrersitz trägt und die relativ zu der restlichen Fahreinheit um eine Hochachse zwischen einer Vorwärtsstellung und einer Rückwärtsstellung verschwenkbar ist, wobei die Drehkonsole als Komponenten den Fahrersitz, einen Armaturenträger, ein Lenkrad, einen Fahrtrichtungsgeber, einen Bremsgeber, einen Fahrgeschwindigkeitsgeber und ein Bedienelement zum Bedienen der Mulde trägt, derart, dass die räumliche Zuordnung dieser Komponenten zueinander bei einer Verschwenkung der Drehkonsole unverändert bleibt.

Das zwischen der Fahreinheit und der Muldeneinheit angeordnete Gelenk ist demnach geeignet, eine Relativbewegung um die Hochachse zu ermöglichen (Knicken), um eine Lenkbewegung zu erzeugen. Die Schwenkstellung zwischen Fahreinheit und Muldeneinheit kann dabei durch eine zwischen der Fahreinheit und der Muldeneinheit wirkende Lenkvorrichtung aufgezwungen werden. Mithilfe der Lenkvorrichtung kann eine Kurvenfahrt des Arbeitsfahrzeugs realisiert werden.

Darüber hinaus kann das Gelenk auch ausgebildet sein, um eine Relativbeweglichkeit um die Längsachse zuzulassen, die auch als "Pendeln" bezeichnet wird. Die Relativbewegung sowohl um die Längsachse als auch um die Hochachse ist dementsprechend jeweils eine Art Schwenkbewegung.

Insbesondere kann es sich bei dem Gelenk um ein sogenanntes Knick-Pendel-Gelenk handeln, wie es zum Beispiel aus der DE 101 30 530 C1 oder der EP 2 218 835 A1 bekannt ist.

Das Arbeitsfahrzeug kann insbesondere ein knickgelenktes Fahrzeug, also ein Lader, wie z.B. ein Dumper oder ein Radlader sein.

Die Fahreinheit und die Muldeneinheit können jeweils eine starre Radachse tragen. Aufgrund der Verschwenkbarkeit zwischen Fahreinheit und Muldeneinheit ist dennoch eine Lenkbarkeit des Arbeitsfahrzeugs gegeben.

Die Mulde ist relativ zu der sie tragenden Muldeneinheit verschwenkbar, das heißt insbesondere anhebbar, um das in der Mulde befindliche Gut ausschütten zu können. Ferner kann die Mulde derart verschwenkbar angeordnet sein, dass eine Verdrehung relativ zur sie tragenden Muldeneinheit ermöglicht ist, um das in der Mulde befindliche Gut wahlweise seitlich oder in Richtung des Arbeitsfahrzeugs vor der Muldeneinheit auszuschütten.

Die Vorwärtsstellung und die Rückwärtsstellung der den Fahrersitz tragenden Drehkonsole können um 180° zueinander versetzt sein. Dementsprechend kann die Drehkonsole um 180° verschwenkbar sein.

Die Vorwärtsstellung kann entsprechend einer Blickrichtung des Fahrers weg von der Mulde definiert werden. In diesem Fall befindet sich die Mulde bzw. die Muldeneinheit hinter dem Rücken des Fahrersitzes und damit des Fahrers.

Dementsprechend kann die Rückwärtsstellung als eine Stellung des Fahrersitzes und damit der Drehkonsole entsprechend einer Blickrichtung des Fahrers hin zur Mulde definiert werden. Die Rückwärtsstellung ist demnach geeignet, das Befüllen und Entleeren der Mulde direkt vom Fahrersitz aus bequem zu beobachten.

Demnach wird bei einer Fahrtrichtung "vorwärts" die Mulde gezogen, das heißt, dass die Fahreinheit voraus fährt. Dies hat Vorteile in der Fahrdynamik und der Lastverteilung, insbesondere im beladenen Zustand. Zudem hat der Fahrer ein besseres Sichtfeld und ist weniger Schmutz bzw. Staub ausgesetzt als bei einer Fahrt in Rückwärtsrichtung, bei der die Muldeneinheit voraus fährt.

Bei einer Fahrt in Rückwärtsrichtung, also mit vorausfahrender Muldeneinheit, kann die maximale Fahrgeschwindigkeit aus Sicherheitsgründen gegenüber einer Vorwärtsfahrt begrenzt sein.

An der Fahreinheit kann ein Fahrerschutzaufbau, insbesondere eine Fahrerkabine vorgesehen sein, innerhalb der der drehbare Fahrersitz angeordnet ist.

Der Fahrerschutzaufbau kann die üblichen Sicherheitsmerkmale erfüllen, wie insbesondere einen FOPS-Schutz (fall over protection system) sowie einen ROPS-Schutz (roll over protection system). Dazu kann in dem Rahmen des Fahrerschutzaufbaus eine entsprechend stabile Struktur, wie beispielsweise ein Bügel vorgesehen sein. Die Schutzwirkung sollte unabhängig von der Drehstellung des Fahrersitzes bzw. der Drehkonsole für den Fahrer stets gegeben sein.

Die Drehkonsole kann außer dem Fahrersitz usw. noch wenigstens eine der folgenden Komponenten tragen: Bedienelemente zum Ansteuern von Funktionen des Arbeitsfahrzeugs, Anzeigeeinrichtungen, Startschloss.

Als Bedienelement kann z.B. ein Joystick vorgesehen sein, der zur Steuerung der Mulde, insbesondere zum Anheben/Auskippen, aber auch zum seitlichen Verdrehen dient. Mithilfe des Joysticks kann der Fahrer die Mulde leicht so anheben oder bewegen, wie er sie für den konkreten Einsatz benötigt.

Der Fahrtrichtungsgeber kann z.B. ein elektrischer Schalter zum Wählen zwischen einer Vorwärtsfahrt und einer Rückwärtsfahrt sein. Er kann an dem Joystick vorgesehen sein, um für den Fahrer jederzeit gut erreichbar zu sein. Anstelle eines Schalters kann die Wahl der Fahrtrichtung auch mit einem Lenkstockhebel erfolgen.

Der Fahrgeschwindigkeitsgeber kann ebenfalls durch einen Joystick gebildet werden. Ebenso ist es aber auch möglich, den Fahrgeschwindigkeitsgeber als separates elektrisches Gaspedal bereit zu stellen. Mit Betätigen des Gaspedals kann der Fahrer die gewünschte Fahrgeschwindigkeit einstellen.

Bei dem Bremsgeber kann es sich zum Beispiel um ein Bremspedal handeln.

Als Bedienelemente zum Ansteuern von Funktionen des Arbeitsfahrzeugs eignen sich Joysticks, Schalter, Taster und Knöpfe.

An der Drehkonsole kann auch das Startschloss angeordnet sein. Dabei kann es sich - wie der Name schon sagt - um ein mechanisches Schloss handeln, in das in bekannter Weise ein Zündschlüssel einzuführen ist, um die Funktionen und insbesondere den Antrieb zu starten. Ebenso kann das Startschloss auch elektronisch, z.B. mit einer berührungslosen Übertragung einer Freigabeinformation ausgeführt sein. Hierzu sind aus dem Stand der Technik vielfältige Lösungen bekannt.

Die Drehkonsole kann als Komponenten den Fahrersitz, den Armaturenträger, das Lenkrad, den Fahrtrichtungsgeber, den Fahrgeschwindigkeitsgeber, das Startschloss und den Bremsgeber tragen, wobei die räumliche Zuordnung dieser Komponenten bei einer Verschwenkung der Drehkonsole unverändert bleibt. Damit ändert sich die räumliche Anordnung zwischen dem Fahrersitz und den weiteren Komponenten nicht, so dass der Fahrer nach einem Verschwenken der Drehkonsole keine Neujustierung vornehmen muss.

Der Fahrgeschwindigkeitsgeber und/oder der Bremsgeber können jeweils ein Pedal aufweisen, das an der Drehkonsole gehalten ist und um eine Schwenkachse relativ zu der Drehkonsole verschwenkbar ist, wobei die Schwenkachse oberhalb von einer jeweils an dem Pedal des Fahrgeschwindigkeitsgeber und/oder an dem Pedal des Bremsgebers vorgesehenen Fußkontaktfläche angeordnet ist. Damit ist es möglich, die Pedale an der Drehkonsole hängend anzubringen. Durch die hängenden Pedale ergeben sich ein größerer Betätigungsbereich und eine bessere ergonomische Krafteinleitung.

Der Antrieb kann insbesondere in bekannter Weise hydrostatisch erfolgen.

Der Antrieb kann einen Motor aufweisen, der auf der Fahreinheit seitlich neben einer sich in Fahrtrichtung erstreckenden Längs-Mittelachse angeordnet ist. Dabei kann die Drehkonsole bezüglich der Längs-Mittelachse auf der anderen Seite gegenüber von dem Motor angeordnet sein. Die Längs-Mittelachse erstreckt sich dabei etwa in der Mitte des Fahrzeugs in Längsrichtung. Dementsprechend können der Motor zum Beispiel rechts von der Längs-Mittelachse und die Drehkonsole mit dem Fahrersitz links von der Längs-Mittelachse angeordnet sein. Dementsprechend können Drehkonsole und Motor auch nebeneinander angeordnet sein, mit dazwischen liegender Längs-Mittelachse.

Der Fahrerschutzaufbau kann sich lediglich nur über die Drehkonsole erstrecken. Besonders bevorzugt kann sich der Fahrerschutzaufbau nur über die Seite des Arbeitsfahrzeugs erstrecken, in der die Drehkonsole angeordnet ist. Dabei kann der Fahrerschutzaufbau insbesondere derart ausgebildet sein, dass er sich nicht über die Längs-Mittelachse hinaus auf die gegenüberliegende Seite, z.B. rechte Seite des Arbeitsfahrzeugs erstreckt.

Anstelle des Motors kann wenigstens ein Kühler des Motors auf gleicher Höhe wie die Drehkonsole neben der Drehkonsole, aber auf der bezüglich der Längs-Mittelachse gegenüberliegenden Seite angeordnet sein.

Wenn die Drehkonsole außermittig, also neben der Längs-Mittelachse angeordnet ist, kann es zweckmäßig sein, wenn sich ein Aufstieg zum Fahrersitz seitlich an dem Fahrzeug, noch vor der Radachse der Fahreinheit (in Vorwärtsrichtung gesehen) befindet, also nicht zwischen den beiden Radachsen. Dies ermöglicht einen kompakten Aufbau des Fahrzeugs.

Der Aufbau des Fahrzeugs kann noch kompakter ausgeführt werden, wenn ein Besteigen des Fahrersitzes nur dann möglich ist, wenn der Fahrersitz in Vorwärtsstellung steht, also mit Blickrichtung weg von der Mulde. In diesem Fall können an der Seite des Fahrzeugs Trittstufen vorhanden sein, die einen bequemen Zugang zum Fahrersitz ermöglichen.

Wenn hingegen der Fahrersitz in Rückwärtsstellung steht, ist der Zugang zum Fahrersitz über die Trittstufen durch die Rückenlehne versperrt.

Um einen Zugang zum Motor zu gewährleisten, können seitliche Öffnungen vorgesehen sein. Insbesondere können zwei Öffnungen vorgesehen sein, wobei die obere Öffnung (Abdeckung) nach oben schwenkt, während die untere Öffnung (Abdeckung) um eine vertikale Achse zur Seite, das heißt nach vorne schwenken kann.

Es können Hydraulikelemente zum Steuern der Fahrt des Arbeitsfahrzeugs vorgesehen sein, wobei die Hydraulikelemente von der Drehkonsole getragen werden. Insbesondere können sämtliche Steuerelemente an der Drehkonsole vorgesehen sein.

An einer Unterseite der Drehkonsole kann ein Hydraulikträger vorgesehen sein, zum Tragen von wenigstens einer der folgenden Komponenten: Hydraulikleitung,

Hydraulikschlauch, Hydraulikverschraubung, Verbindungsverschraubung zum Koppeln von zwei Hydraulikleitungen, Bremszylinder.

Die Lenkung des Fahrzeugs sowie die Bremsbetätigung können insbesondere hydraulisch erfolgen, wobei die zugehörigen Elemente, wie Lenkgetriebe und Bremsnehmerzylinder an der Drehkonsole angebracht sein können. Der Bremsnehmerzylinder kann in geeigneter Weise an der Drehkonsole, zum Beispiel liegend, eingebaut werden. Er kann über ein Hebelsystem durch das Bremspedal angesteuert werden. Die Hydraulikschläuche, die aus der Drehkonsole durch eine Drehentkopplung in den Motorraum geführt werden, können dementsprechend unter Arbeitsdruck stehen. Es werden demnach nicht nur hydraulische Vorsteuersignale übertragen. Vielmehr kann die gesamte hydraulische Steuerung auf der Drehkonsole angeordnet sein.

Die Gasbetätigung kann alternativ auch elektronisch erfolgen.

Der Hydraulikträger an der Drehkonsole kann in Form eines nach unten verlängerten Schlauchträgers ausgebildet sein, der sich ins Innere der Fahreinheit erstreckt. Die Hydraulikschläuche der Drehkonsole sind an dem Schlauchträger entlang geführt und enden jeweils in einer Verschraubung am Schlauchträger. An der Verschraubung werden dann jeweils entsprechende weiterführende Hydraulikschläuche angebracht. Die weiterführenden Schläuche können im Wesentlichen waagerecht und kreisbogenförmig fortgeführt werden.

In der Fahreinheit unterhalb von der Drehkonsole kann eine Gleitplatte vorgesehen sein, auf der wenigstens einer der Hydraulikschläuche bei einem Verschwenken der Drehkonsole gleitend bewegbar ist. Die Hydraulikschläuche können so bei einem Verschwenken der Drehkonsole dem Schlauchträger folgen und mit geringem Kraftaufwand auf der Gleitplatte gleiten. Die Schläuche bzw. die Gleitplatte können hierzu mit einer reibungsarmen Oberfläche bzw. Beschichtung versehen sein.

Es kann ein Fahrtrichtungsgeber vorgesehen sein, zum Vorgeben einer Fahrtrichtung und/oder einer Fahrgeschwindigkeit. Ebenso kann ein Lenkgeber vorgesehen sei, zum Vorgeben einer Lenkbewegung. Der Lenkgeber kann mit einer Hydraulikeinrichtung gekoppelt sein und diese hydraulisch ansteuern. Der Fahrtrichtungsgeber und ggfs. auch der Fahrgeschwindigkeitsgeber können mit einer elektrischen bzw. elektronischen Steuerung verbunden sein, die ihrerseits eine Hydraulikeinrichtung ansteuert, um die gewünschten Steuerbefehle auszuführen.

Bei der Hydraulikeinrichtung kann es sich z.B. um den schon erwähnten hydrostatischen Antrieb handeln, der die Räder einzeln ansteuert bzw. antreibt.

Die Hydraulikeinrichtungen können demnach dazu ausgebildet sein, die gewünschte Fahrtrichtung und/oder Lenkbewegung zu bewirken, wobei die hydraulische Wirkung zwischen dem Fahrtrichtungsgeber und dem Lenkgeber einerseits und der jeweils zugeordneten Hydraulikeinrichtung andererseits bei einem Verschwenken der Drehkonsole zwischen Vorwärtsstellung und Rückwärtsstellung jeweils vertauscht wird.

Das bedeutet, dass das Lenkschema und der Fahrtrichtungsgeber bei einem Verschwenken der Drehkonsole automatisch umgeschaltet werden können. Hierzu können Sensoren an der Drehkonsole bzw. am Rahmen angebracht werden, die die jeweilige Dreh-Stellung erkennen. Somit kann der Fahrer bei Betätigen des Fahrtrichtungsgebers in Vorwärtsrichtung immer eine Fahrt in Blickrichtung (Vorwärtsfahrt) bewirken. Dies gilt auch dann, wenn der Fahrersitz mit Blickrichtung zur Muldeneinheit, also in Rückwärtsstellung steht. Für den zur Muldeneinheit blickenden Fahrer handelt es sich bei einer Fahrt mit vorausfahrender Muldeneinheit dann um eine Vorwärtsfahrt, obwohl das Fahrzeug unter den obigen Definitionen eine Rückwärtsfahrt vollzieht.

Durch das automatische Umschalten des Lenkschemas und des Fahrtrichtungsgebers wird somit vom Fahrer kein Umdenken verlangt. Das Arbeitsfahrzeug verhält sich stets so, wie es der Fahrer durch das Betätigen der Bedienungselemente vorgibt. Eine Vorwärtsfahrt ist für ihn immer eine Fahrt in Blickrichtung. Eine Rechtsfahrt immer eine Fahrt nach rechts, unabhängig von seiner Sitzposition.

Es kann eine Drehstellungs-Überwachungseinrichtung vorgesehen sein, zum Überwachen der Drehstellung der Drehkonsole und Erzeugen eines von der Drehstellung abhängigen Signals. Wird zum Beispiel erkannt, dass die Drehkonsole während der Fahrt verschwenkt wird, kann der hydrostatische Antrieb abgestellt werden, so dass das Fahrzeug zum Beispiel durch die Bremswirkung des antriebslosen hydrostatischen Antriebs kontrolliert zum Stehen kommt. Für einen ordnungsgemäßen Fahrbetrieb ist es somit erforderlich, dass sich die Drehkonsole und damit der Fahrersitz in einer klar definierten Stellung, nämlich entweder in der Vorwärtsstellung oder in der Rückwärtsstellung befindet.

Es kann eine Verriegelungseinrichtung vorgesehen sein, zum Verriegeln der Position der Drehkonsole jeweils in der Vorwärtsstellung und/oder der Rückwärtsstellung. Die Verriegelungseinrichtung kann zum Beispiel einen formschlüssigen Riegel vorsehen, der in den beiden Fahrtrichtungsstellungen vorwärts und rückwärts jeweils in eine entsprechende Aufnahme eingreift, ähnlich wie ein Türschloss. Eine Entriegelung kann dabei über einen Handhebel erfolgen, der den Riegel aus der Aufnahme, zum Beispiel gegen die Wirkung einer Feder, zieht.

Die Drehung der Drehkonsole erfolgt in einfacher Weise manuell. Um die Drehung zu gewährleisten, kann die Drehkonsole über ein Gleitlager oder ein Kugellager auf der Fahreinheit gelagert sein.

Bei einem Verschwenken der Drehkonsole schwenkt der Sitz in das Innere der ROPS/FOPS-Struktur. Das andere Ende der Drehkonsole, zum Beispiel mit dem Lenkrad und dem Armaturenträger, schwenkt nach außen über die Außenkontur des Fahrzeugs hinaus.

Die Lenksäule kann in Richtung des Armaturenträgers verschwenkbar sein, um den Einstieg für den Fahrer zu vergrößern und damit zu erleichtern.

Das zwischen der Fahreinheit und der Muldeneinheit vorgesehene Gelenk kann zusätzlich zu der Bewegung um die Hochachse auch eine Verschwenkbewegung um eine Längsachse des Arbeitsfahrzeugs ermöglichen.

Insbesondere kann das Gelenk ein Knick-Pendel-Gelenk sein.

Z.B. kann das Knick-Pendel-Gelenk ein die Muldeneinheit mit der Fahreinheit verbindendes unteres Kugelgelenk und ein oberhalb von dem unteren Kugelgelenk angeordnetes, die Muldeneinheit mit der Fahreinheit verbindendes oberes Kugelgelenk aufweisen. Eine erste Komponente des oberen Kugelgelenks kann mit der Muldeneinheit ortsfest verbunden sein, während eine zweite Komponente des oberen Kugelgelenks über ein relativ zu der Fahreinheit bewegliches Gestänge mit der Fahreinheit verbunden sein kann. Das Gestänge kann relativ zu der Fahreinheit verschwenkbar sein.

Das Arbeitsfahrzeug kann mindestens eine Kamera aufweisen, die in eine Fahrtrichtung des Arbeitsfahrzeugs ausgerichtet ist, um Bilder eines Fahrwegs zu erfassen. Ferner kann eine Anzeigeeinrichtung, insbesondere ein Bildschirm vorgesehen sein, welcher die von der Kamera erfassten Bilder wiedergibt. Die Anzeigeeinrichtung kann insbesondere an der Drehkonsole angeordnet sein und sich mit der Drehkonsole bewegen, wenn diese verschwenkt wird.

Die Bilder der Kamera werden insbesondere dann auf der Anzeigeeinrichtung angezeigt, wenn diejenige Fahrtrichtung aktiviert ist, in welche die Kamera ausgerichtet ist.

In einer Variante können die Bilder dann auf der Anzeigeeinrichtung angezeigt werden, wenn die Drehkonsole in diejenige Fahrtrichtung geschwenkt ist, in welche die Kamera ausgerichtet ist. Die Kamera kann beispielsweise an der Mulde oder an einer Frontseite der Muldeneinheit angeordnet sein, um bei einer Fahrt in Rückwärtsrichtung, also mit vorausfahrender Muldeneinheit den Fahrweg zu erfassen. Ebenso ist es auch möglich, dass die Kamera in eine Richtung ausgerichtet ist, die entgegengesetzt zu der Blickrichtung des Fahrersitzes und damit der Drehkonsole steht.

Diese und weitere Vorteile und Merkmale der Erfindung werden nachfolgend anhand von Beispielen unter Zuhilfenahme der begleitenden Figuren näher erläutert. Es zeigen:
- **Figur 1**: in Seitenansicht ein Arbeitsfahrzeug mit drehbarem Fahrersitz in Vorwärtsstellung;
- **Figur 2**: das Arbeitsfahrzeug mit Fahrersitz in Rückwärtsstellung;
- **Figur 3**: eine gegenüberliegende Seitenansicht des Arbeitsfahrzeugs;
- **Figur 4**: eine Perspektivansicht einer Drehkonsole mit Fahrersitz;
- **Figur 5**: eine Perspektivansicht der an der Drehkonsole angeordneten Hydraulikleitungen;
- **Figur 6**: eine schematische Draufsicht auf eine Ausführungsform einer Fahreinheit (Vorderwagen) eines Arbeitsfahrzeugs; und
- **Figur 7**: eine Perspektivansicht einer anderen Ausführungsform der Fahreinheit.

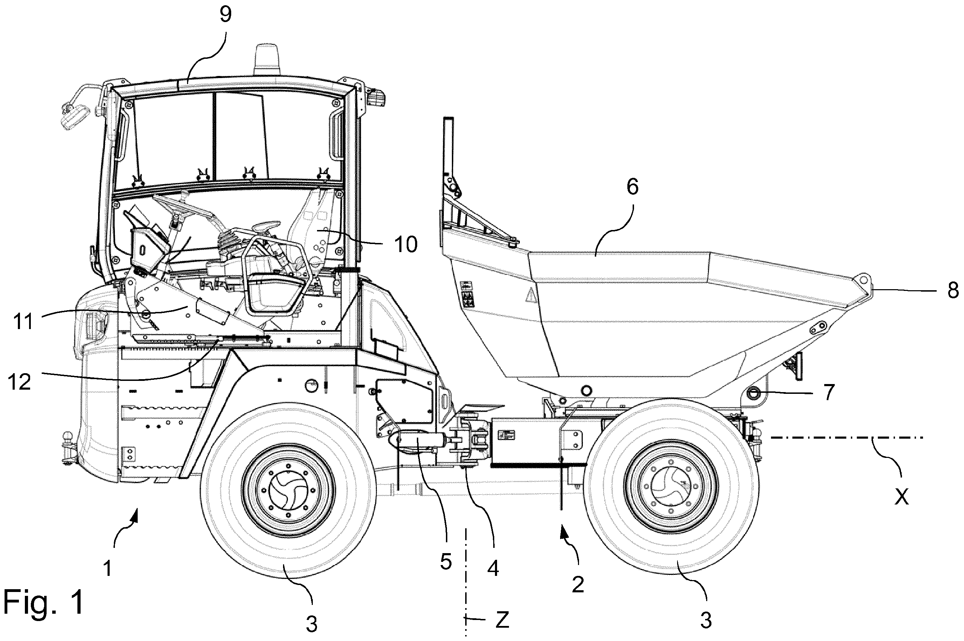

Figur 1 zeigt in Seitenansicht einen als Arbeitsfahrzeug dienenden sogenannten Dumper. Als Dumper werden zum Beispiel kleinere knick-gelenkte Muldenkipper bezeichnet.

Das Fahrzeug weist eine Fahreinheit 1 und eine Muldeneinheit 2 auf, die jeweils eine starre Radachse 3 mit Rädern tragen. Zwischen der Fahreinheit 1 und der Muldeneinheit 2 ist ein sogenanntes Knick-Pendel-Gelenk 4 angeordnet. Ein derartiges Knick-Pendel-Gelenk 4 wurde oben bereits beschrieben und dient zum Koppeln der Fahreinheit 1 mit der Muldeneinheit 2 derart, dass die Fahreinheit 1 und die Muldeneinheit 2 sowohl um eine Hochachse Z als auch um eine Längsachse X relativ zueinander bewegbar bzw. verschwenkbar sind.

Die Verschwenkung um die Hochachse Z ermöglicht eine Lenkbewegung dadurch, dass die beiden Radachsen 3 zueinander in einen Winkel gestellt werden können (sogenannte Knick-Bewegung).

Die Beweglichkeit um die Längsachse X wird auch als "Pendeln" bezeichnet und erhöht die Geländegängigkeit des Arbeitsfahrzeugs erheblich.

Die Verschwenkbewegung um die Hochachse Z wird durch eine Lenkvorrichtung bewirkt, die eine hydraulische Kolben-Zylinder-Einheit 5 umfasst. Mithilfe der Kolben-Zylinder-Einheit 5 kann die Winkelstellung zwischen der Fahreinheit 1 und der Muldeneinheit 2 eingestellt werden.

Die Muldeneinheit 2 trägt eine Mulde 6 an ihrer Oberseite. Die Mulde 6 ist durch einen nicht dargestellten hydraulischen Hebemechanismus um eine Schwenkachse 7 verschwenkbar bzw. anhebbar. Dadurch kann die zum Beispiel loses Schüttgut tragende Mulde 6 über eine Ladekante 8 einfach entleert werden.

Auf der Fahreinheit 1 ist ein Fahrerschutzaufbau 9 aufgebaut, die unter anderem einen Fahrersitz 10 sowie verschiedene Bedienelemente (Lenkrad, Joystick, Gas- und Bremspedale) umschließt. Der Fahrerschutzaufbau 9 wird unter anderem durch Bügel gebildet, die einen Überrollschutz bieten, wodurch eine ROPS/FOPS-Struktur verwirklicht ist.

Der Fahrersitz 10 ist auf einer Drehkonsole 11 befestigt, die auch die weiteren Bedienelemente trägt, wie später noch erläutert wird. Die Drehkonsole 11 ist über ein Gleitlager 12 relativ zu der restlichen Fahreinheit 1 drehbar gelagert. Alternativ zu dem Gleitlager 12 kann die Drehkonsole 11 auch mittels eines Kugellagers oder mithilfe von kleineren Rollen gelagert sein.

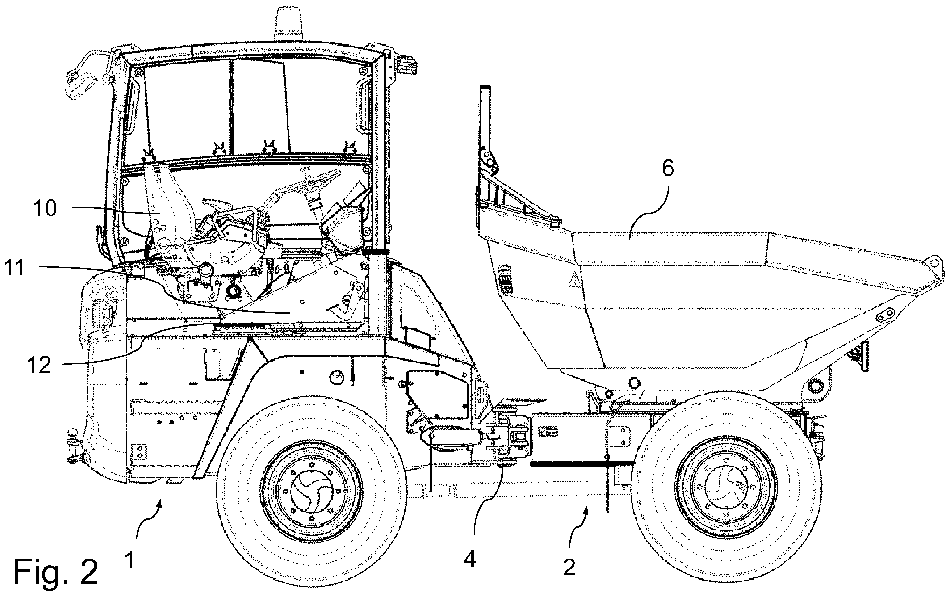

Insbesondere ist die Drehkonsole 11 um 180° zwischen einer Vorwärtsstellung und einer Rückwärtsstellung verschwenkbar, wie die Figuren 1 und 2 zeigen.

Die Figur 1 zeigt die Drehkonsole mit dem Fahrersitz 10 in Vorwärtsstellung. Ein Fahrer, der auf dem Fahrersitz 10 sitzt blickt in Fahrtrichtung vorwärts, weg von der Mulde 6.

Figur 2 zeigt das gleiche Arbeitsfahrzeug, jedoch mit einer Drehstellung der Drehkonsole 11 und damit dem Fahrersitz 10 in Rückwärtsstellung. Hier blickt ein auf dem Fahrersitz 10 sitzender Fahrer in Rückwärtsstellung, hin zur Mulde 6.

Wie die Figuren 1 und 2 zeigen, wird dabei nicht nur der Fahrersitz 10 verschwenkt, sondern der gesamte Fahrerstand mit sämtlichen Bedienelementen.

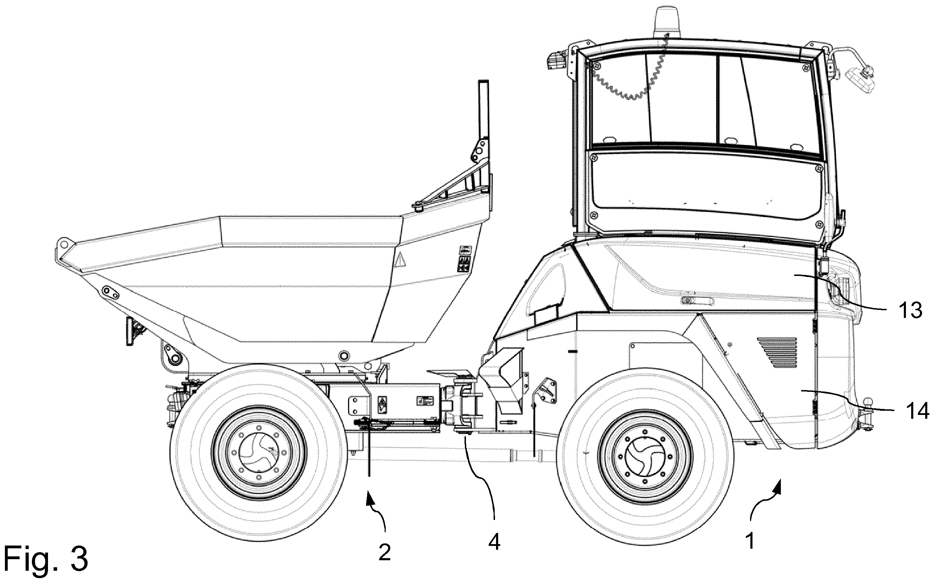

Figur 3 zeigt das Arbeitsfahrzeug der Figuren 1 und 2 von der anderen, rechten Fahrzeugseite.

Hier ist eine nach oben verschwenkbare obere Motorabdeckung 13 und eine nach vorne verschwenkbare untere Motorabdeckung 14 erkennbar.

Dahinter befindet sich ein Verbrennungs- oder Elektromotor, der eine Hydraulikpumpe antreibt, um einen hydrostatischen Antrieb für das Arbeitsfahrzeug in bekannter Weise zu verwirklichen. Alternativ kann der Verbrennungs- oder Elektromotor auch auf ein Getriebe wirken, mittels welchem das Arbeitsfahrzeug antreibbar ist.

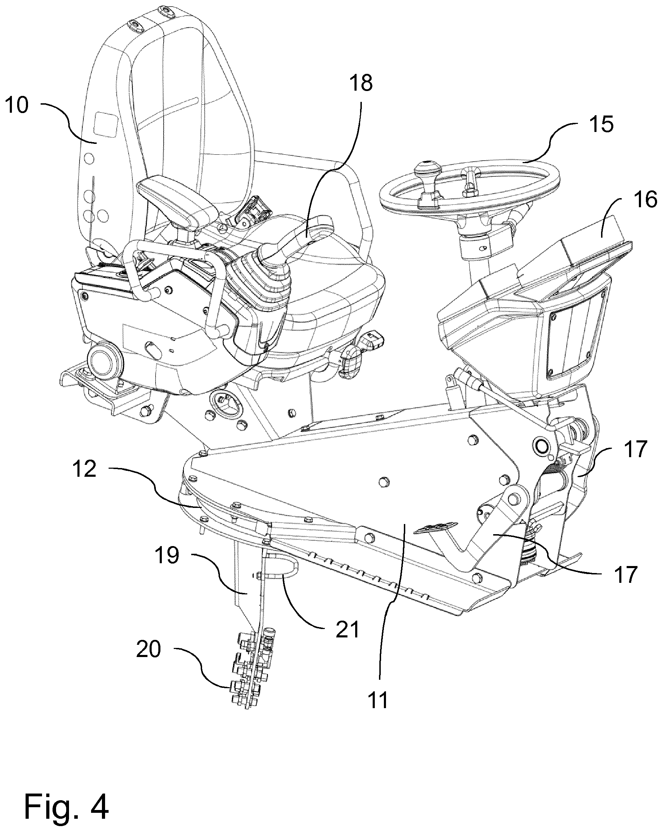

Figur 4 zeigt die Drehkonsole 11 mit dem Fahrersitz 10 in Perspektivdarstellung. Der Fahrersitz 10 ist demnach starr auf der Drehkonsole 11 befestigt, die ihrerseits über das Gleitlager 12 relativ zu der in Figur 4 nicht dargestellten Fahreinheit 1 verschwenkbar ist.

Die Drehkonsole 11 trägt darüber hinaus noch den gesamten Fahrerstand einschließlich der üblichen Bedien- und Anzeigeelemente. Dies kann - wie in Figur 4 gezeigt - ein Lenkrad 15 und ein Armaturenträger 16 mit weiteren Bedienelementen und Anzeigeeinrichtungen sein.

Darüber hinaus trägt die Drehkonsole 11 zwei Pedale 17, die als Bremspedale oder Fahrgeschwindigkeitsgeber (z.B. in Form eines elektronischen Gaspedals) dienen.

An dem Fahrersitz 10 ist zudem ein Joystick 18 angeordnet, zum Bedienen der Mulde 6 und der Fahrt des Arbeitsfahrzeugs. Insbesondere kann an dem Joystick 18 ein elektrischer Schalter zum Wählen der Fahrtrichtung (Vorwärts, Rückwärts) angeordnet sein.

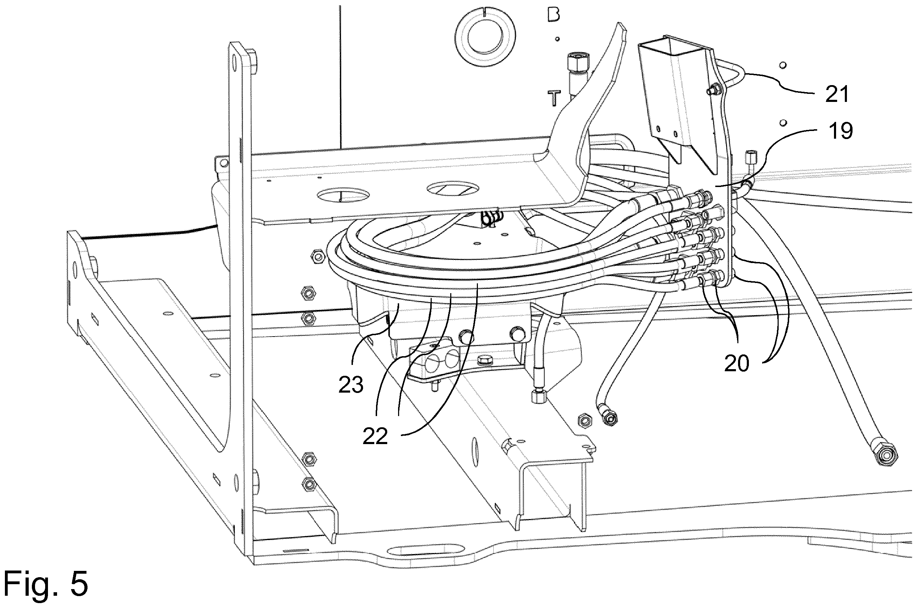

Unterhalb von dem Gleitlager 12 ist an der Drehkonsole 11 ein Hydraulikträger bzw. Schlauchträger 19 befestigt, der sich nach unten erstreckt und mehrere Hydraulikverschraubungen 20 trägt. Die Hydraulikverschraubungen 20 dienen als Umlenkungen für Hydraulikleitungen, die zu den Bedienelementen am Fahrersitz 10 führen. An den Hydraulikverschraubungen 20 können jeweils entsprechende Hydraulikschläuche angeschraubt werden, wie auch Figur 5 zeigt.

Figur 5 zeigt den sich nach unten erstreckenden Hydraulikträger 19 mit mehreren Hydraulikverschraubungen 20.

Oberhalb von den Hydraulikverschraubungen 20 ist eine Schlauchhalteeinrichtung 21 in Form eines an dem Hydraulikträger 19 verschraubten Bügels vorgesehen.

Von dem Hydraulikträger 19 und den Hydraulikverschraubungen 20 erstrecken sich mehrere Hydraulikschläuche 22 kreisbogenförmig weg. Sie sind derart gestaltet, dass sie der 180° Verschwenkung der Drehkonsole 11 leicht folgen können. Dazu ist eine Gleitplatte 23 vorgesehen, auf der die Hydraulikschläuche 22 aufliegen und leicht gleitend bewegbar sind. Dadurch soll die Reibung vermindert werden, um es dem Bediener zu erleichtern, die Drehkonsole 11 zwischen der Vorwärtsstellung und der Rückwärtsstellung zu verschwenken.

Das Arbeitsfahrzeug kann in einer Bauweise realisiert werden, die dazu dient, die Gesamthöhe des Arbeitsfahrzeugs gering zu halten. Ziel ist es, die Gesamthöhe des Arbeitsfahrzeugs mit Kabine bzw. Fahrerschutzaufbau bei bevorzugt maximal 3 Metern zu halten. Dies hat Vorteile für den Transport des Arbeitsfahrzeugs zum Einsatzort.

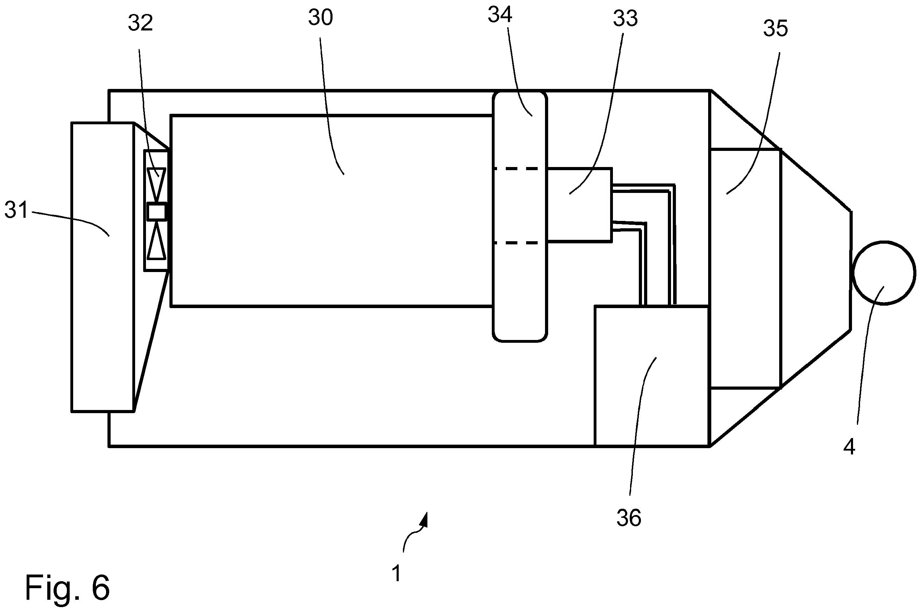

Figur 6 zeigt in schematischer Draufsicht eine Anordnung von Komponenten im Vorderwagen (Fahreinheit 1) eines Arbeitsfahrzeugs gemäß dieser Ausführungsform.

Der in Fig. 6 nicht gezeigte, mit der Drehkonsole 11 drehbare Fahrersitz 10 ist im Wesentlichen, in Längsrichtung gesehen, mittig auf der Fahreinheit 1 positioniert. Der in Fig. 6 ebenfalls nicht gezeigte Hydraulikträger 19 an der Drehkonsole 11 erstreckt sich deshalb ebenfalls mittig nach unten in den Motorraum unterhalb der Drehkonsole 11 bzw. des Fahrersitzes 10.

Um für den Hydraulikträger 19 ausreichend Bauraum zu schaffen, ist ein Motor 30 (z.B. ein Verbrennungsmotor oder ein Elektromotor) in Längsrichtung seitlich versetzt angeordnet. Der Motor 30 ist längs eingebaut, d.h. seine Kurbelwelle verläuft in Längsrichtung der Fahreinheit 1. Der Motor 30 ist in Längsrichtung geneigt eingebaut, d.h. die Kurbelwelle des Motors 30 verläuft auch bei waagerecht stehendem Arbeitsfahrzeug nicht waagerecht. Der Motor 30 kann um 1° bis 5° aus der Waagerechten in Längsrichtung geneigt sein. Insbesondere kann der Motor 30 um 1 bis 3° aus der Längsrichtung geneigt sein. Bei der Neigung in Längsrichtung ist die Kurbelwelle auch bei waagerecht stehendem Arbeitsfahrzeug um den genannten Betrag geneigt.

Am Motor 30 sind an einem ersten Endbereich (z.B. einem, in Fahrtrichtung gesehen, vorderen Bereich) ein Ventilator und an einem zweiten Endbereich (z.B. einem hinteren Bereich) eine Hydraulikpumpe angebaut. Der Motor 30 liegt an seinem ersten Endbereich tiefer als an dem zweiten Endbereich. Die Neigung des Motors 30 dient dazu, die Bauhöhe des Motorraums gering zu halten.

Ein weiteres Detail, um dieses Ziel zu erreichen, ist die Wahl der Montagepunkte des Motors 30. Der Motor 30 hat bevorzugt 4 Montagepunkte, die den Motor 30 mit der Fahreinheit 1 verbinden. Mindestens zwei der Montagepunkte verbinden den Motor 30 mit einem Rahmen, der den Motor 30 umgibt. Mindestens ein Montagepunkt verbindet den Motor 30 mit der feststehenden, d.h. ungefederten Achse. Dabei kann der Motor 30 mit einem Differentialgehäuse oder einem Achstrichter der Achse verbunden sein. Der Motor 30 ist dadurch tiefer eingebaut, da auf einen zusätzlichen Querträger verzichtet wird

Alternativ kann der Motor 30 auch um die Kurbelwellenachse geneigt eingebaut sein. Die Kurbelwelle bildet in dieser Variante eine Achse, um die der Motor 30 geneigt ist. Die Neigung kann 1° bis 10° Abweichung aus der Vertikalen betragen. Bevorzugt beträgt die Neigung 1° bis 7° Abweichung aus der Vertikalen. Der Motor 30 benötigt so weniger Bauhöhe. Zudem kann für den Hydraulikträger 19 Platz geschaffen werden.

Fig. 6 zeigt die Anordnung von verschiedenen Komponenten im Bereich des Motors 30.

Ein Kühlpaket 31 (Motorkühler, Hydraulikkühler, ggf. Klimakondensator) ist an der Stirnseite der Fahreinheit 1 angeordnet, wobei eine im Wesentlichen mittige Anordnung möglich ist. Dahinter sitzen in Längsrichtung seitlich versetzt ein Ventilator 32 sowie der Motor 30. Kühlpaket 31 und Motor 30 sind also anders als üblich in Längsrichtung versetzt zueinander angeordnet. Zur Führung des Luftstroms in Richtung des Motors 30 ist das Gehäuse um das Kühlpaket 31 trichterförmig auf den Motor 30 bzw. den Ventilator 32 zulaufend gestaltet.

Am Motor 30 ist am hinteren Ende (in Richtung der Muldeneinheit) eine Hydraulikpumpe 33 angeordnet, die durch die Kurbelwelle des Motors 30 angetrieben ist.

Zur Reinigung der Abgase wird eine Abgasreinigungseinrichtung 34, wie z.B. ein Dieselpartikelfilter (DPF) oder ein Diesel-Oxidations-Katalysator (DOC) genutzt, der an einer Stirnseite des Motors 30 (hier: der hinteren Stirnseite des Motors 30) oberhalb der Hydraulikpumpe 33 angeordnet ist. Die Hydraulikpumpe 33 ist mit einem Hydrauliktank 36 gekoppelt.

Es ist eine Klimatisierungseinheit 35 vorgesehen, die ein Heizregister, mindestens einen Lüftungsventilator und ggf. einen Verdampfer der Klimaanlage umfassen kann. Der mindestens eine Lüftungsventilator kann als Radialventilator ausgebildet sein und ist in Strömungsrichtung nach dem Verdampfer angeordnet.

Die Klimatisierungseinheit 35 ist in der Fahreinheit 1 im Übergangsbereich zur Muldeneinheit 2 angeordnet. Der Übergangsbereich wird durch den Rahmen gebildet, der in diesem Bereich trichterförmig bzw. zumindest - in der Draufsicht - in Dreieck-Form auf das Knickgelenk 4 zuläuft, wobei die Klimatisierungseinheit 35 zwischen zwei schräg aufeinander zu laufenden Rahmenelementen angeordnet ist.

Der nicht dargestellte Klimakompressor sitzt am Motor 30 und wird über einen Keilriemen oder einen Flach- bzw. Multi-Rippen-Riemen angetrieben.

Es kann eine Steuereinrichtung vorgesehen sein, die die Stellung des Fahrersitzes 10 überwacht und in Abhängigkeit der Sitzposition und Fahrtrichtung richtungsgebundene Funktionen umschaltet oder überwacht. So kann ein akustischer Rückfahrwarner immer dann aktiviert werden, wenn der Fahrer das Fahrzeug rückwärts bewegt, wobei sich die Rückwärtsfahrt dadurch definiert, dass das Fahrzeug in eine Richtung fährt, die entgegen der aktuellen Ausrichtung des Fahrersitzes 10 ist.

Ferner kann auch die Zuordnung der Blinker automatisch je nach Stellung des drehbaren Fahrersitzes 10 angepasst sein, so dass der Fahrer in jeder Position des Sitzes die Blinker wie gewohnt setzen kann, ohne die Drehposition des Sitzes berücksichtigen zu müssen. Selbiges gilt für die Drehrichtung des Lenkrades 15, wobei die Umschaltung bei einer hydrostatischen Lenkung beispielsweise mittels eines elektrisch angesteuerten oder mechanischen hydraulischen Umschaltventils geschehen kann. Bei Nutzung eines elektronischen Lenkgebers ist auch eine elektronische Umschaltung möglich.

Auch kann die Anzeige auf dem am Fahrersitz 10 befindlichen Monitor oder Display/Anzeige automatisch je nach Position des Sitzes eingestellt sein.

Sofern an beiden Stirnseiten des Fahrzeugs Kameras angebracht sind, kann auf dem Monitor dasjenige Kamerabild angezeigt werden, das im Rücken des Fahrers liegt. Das rückwärtige Kamerabild kann dabei seitenverkehrt d.h. auf einer vertikalen Achse gespiegelt angezeigt werden, so dass dem Bediener die Rückwärtsfahrt erleichtert ist.

Ferner kann vorgesehen sein, dass die Steuereinrichtung sicherheitsrelevante Funktionen schalten kann. So kann beispielsweise die Antriebsfunktion des Fahrzeugs deaktiviert sein, wenn der Fahrersitz 10 nicht in einer der beiden Endpositionen arretiert ist oder die Arretierung während der Fahrt gelöst wird. Ebenso kann in den genannten Fällen eine Betriebsbremse oder Feststellbremse aktiviert, oder ein Fahrgetriebe in eine neutrale Position geschaltet werden. Sofern ein hydrostatisches Fahrgetriebe genutzt wird, bewirkt die Neutralstellung eine Bremswirkung.

Ferner kann in Abhängigkeit von der Stellung des Fahrersitzes 10 eine maximale Fahrgeschwindigkeit des Arbeitsfahrzeugs eingestellt sein. So kann in einer Stellung des Sitzes in Fahrtrichtung eine erste maximale Fahrgeschwindigkeit vorgesehen sein und in der zweiten Stellung des Sitzes eine zweite maximale Fahrgeschwindigkeit vorgesehen sein, wobei sich die beiden maximalen Fahrgeschwindigkeiten unterscheiden. Insbesondere kann die maximale Fahrgeschwindigkeit in Vorwärtsfahrt (vgl. Fig. 1) höher sein als in Rückwärtsfahrt (vgl. Fig. 2).

Die Überwachung der Position des Fahrersitzes 10 kann anhand von üblichen Sensoren erfolgen, die mit der Steuereinrichtung verbunden sind.

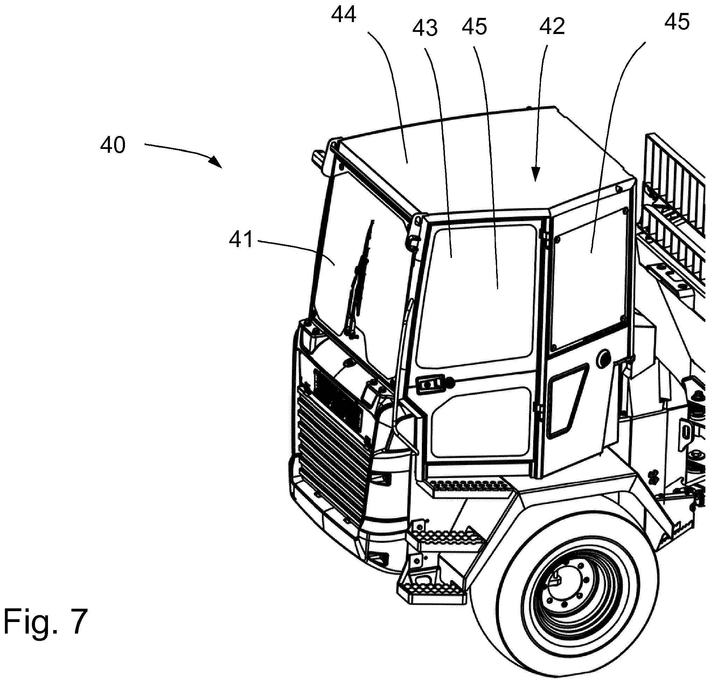

Fig. 7 zeigt eine Variante zum Aufbau der z.B. in Fig. 1 gezeigten Fahrerkabine 9.

Demnach kann die Fahreinheit 1 eine geschlossene Kabine 40 aufweisen, die den Arbeitsplatz des Fahrers umgibt und aus einer Vorderwand 41, einer Rückwand (in der Perspektivdarstellung von Fig. 7 nicht zu sehen) sowie zwei Seitenwänden 42 (in Fig. 7 ist lediglich die in Vorwärtsfahrtrichtung gesehen linke Seitenwand 42 zu sehen) besteht. Die Vorder- und die Rückwand sind jeweils in die beiden wählbaren Fahrtrichtungen ausgerichtet.

Mindestens eine der Seitenwände 42 weist eine nach außen zu öffnenden Tür 43 auf. Alle Wände der Kabine 40 sind mit Sichtfenstern ausgestattet. Oberhalb der Wände ist ein Kabinendach 44 vorgesehen.

Die Kabine 40 ist derart gestaltet, dass es möglich ist, den Fahrersitz 10 innerhalb der geschlossenen Kabine 40 um 180° zu drehen, ohne dass es zu Kollisionen kommen kann. Hierzu kann eine Seite bzw. Seitenwand 42 der Kabine 40 aus mindestens zwei Wandelementen 45 bestehen, die in einem eingeschlossenen Winkel von <180° angeordnet sind, also nicht in einer Ebene zueinander fluchten. Der eingeschlossene Winkel kann in einem Bereich von >160° und <180° liegen. Bevorzugt liegt der eingeschlossene Winkel in einem Bereich von >170° und <180°. Bevorzugt wird eines der Wandelemente 45 durch die Tür 43 für den Zugang zur Kabine 40 gebildet.

Die Tür 43 kann mittels Scharnieren schwenkbar mit der Kabine 40 verbunden sein. Die Scharniere sind derart positioniert, dass die Tür 43 aus der geschlossenen Position in Richtung der Muldeneinheit 2 verschwenkt werden kann, d.h. die Tür 43 kann in Vorwärtsfahrtrichtung gesehen hinten angeschlagen sein. Bevorzugt kann die Tür 43 an einem Wandelement 45 arretiert, z.B. angeklemmt werden, so dass eine sichere Fahrt auch bei geöffneter Tür 43 ermöglicht ist.

Auf Grund von Sicherheitsbestimmungen kann die Höhe der Kabine 40 oder des Fahrerschutzaufbaus nur geringfügig beeinflusst werden. Um dennoch eine geringe Gesamthöhe des Arbeitsfahrzeugs zu erreichen, ist der Rahmen der Fahreinheit 1, auf welchem der Fahrerschutzaufbau angeordnet ist, möglichst niedrig ausgeführt. Dies bedeutet, dass die Höhe des Rahmens, gemessen vom Boden, auf der das Arbeitsfahrzeug im unbeladenen betriebsbereiten Zustand steht, bis zur Oberseite des Rahmens möglichst gering ist. Die Oberseite des Rahmens wird von der Bodenfläche des Fahrerarbeitsplatzes, d.h. dem Fußboden gebildet.

Zur Bereitstellung einer ausreichenden Tragfähigkeit und Geländegängigkeit sollten die Reifen eine gewisse Mindestgröße aufweisen. Dabei liegt das Verhältnis der Höhe der Bodenfläche des Fahrerarbeitsplatzes zum Reifendurchmesser im unbeladenen betriebsbereiten Zustand im Bereich von 1,4 bis 1,0. Bevorzugt liegt das Verhältnis im Bereich von 1,3 bis 1,2.

## Patentansprüche

1. Arbeitsfahrzeug, mit
- einer Fahreinheit (1), die einen Antrieb und einen Fahrersitz (10) aufweist;
- einer Muldeneinheit (2), die eine Mulde (6) zum Aufnehmen einer Last aufweist; und mit
- einem zwischen der Fahreinheit (1) und der Muldeneinheit (2) angeordneten Gelenk (4) zum Koppeln der Fahreinheit (1) mit der Muldeneinheit (2), derart, dass die Fahreinheit (1) und die Muldeneinheit (2) um wenigstens eine Hochachse (Z) des Arbeitsfahrzeugs relativ zueinander bewegbar sind;
wobei
- an der Fahreinheit (1) eine Drehkonsole (11) vorgesehen ist, die den Fahrersitz (10) trägt und die relativ zu der restlichen Fahreinheit (1) um eine Hochachse zwischen einer Vorwärtsstellung und einer Rückwärtsstellung verschwenkbar ist;
**dadurch gekennzeichnet, dass**
- die Drehkonsole (11) als Komponenten den Fahrersitz (10), einen Armaturenträger (16), ein Lenkrad (15), einen Fahrtrichtungsgeber (18), einen Bremsgeber (17), einen Fahrgeschwindigkeitsgeber (17) und ein Bedienelement (18) zum Bedienen der Mulde (6) trägt, derart, dass die räumliche Zuordnung dieser Komponenten zueinander bei einer Verschwenkung der Drehkonsole (11) unverändert bleibt.

2. Arbeitsfahrzeug nach Anspruch 1, wobei die Drehkonsole (11) noch wenigstens eine der folgenden Komponenten trägt:
- Bedienelemente zum Ansteuern von Funktionen des Arbeitsfahrzeugs
- Anzeigeeinrichtungen
- Startschloss.

3. Arbeitsfahrzeug nach Anspruch 1 oder 2, wobei der Fahrtrichtungsgeber und/oder der Bremsgeber jeweils ein Pedal (17) aufweisen, das um eine Schwenkachse relativ zu der Drehkonsole (11) verschwenkbar ist, wobei die Schwenkachse oberhalb von einer jeweils an dem Pedal (17) des Fahrtrichtungsgebers und/oder an dem Pedal (17) des Bremsgebers vorgesehenen Fußkontaktfläche angeordnet ist.

4. Arbeitsfahrzeug nach einem der vorstehenden Ansprüche, wobei an einer Unterseite der Drehkonsole (11) ein Hydraulikträger (19) angeordnet ist, zum Tragen von wenigstens einer der folgenden Komponenten:
- Hydraulikleitung
- Hydraulikschlauch (22)
- Hydraulikverschraubung (20)
- Verbindungsverschraubung zum Koppeln von zwei Hydraulikleitungen
- Bremsgeberzylinder.

5. Arbeitsfahrzeug nach Anspruch 4, wobei
- der Hydraulikträger (19) wenigstens einen Hydraulikschlauch (22) trägt; und wobei
- in der Fahreinheit (1) unterhalb von der Drehkonsole (11) eine Gleitplatte (23) vorgesehen ist, auf der der wenigstens eine Hydraulikschlauch (22) bei einem Verschwenken der Drehkonsole (11) gleitend bewegbar ist.

6. Arbeitsfahrzeug nach einem der vorstehenden Ansprüche, wobei
- die Drehkonsole (11) einen Lenkgeber (15) trägt, zum Vorgeben einer Lenkbewegung;
- der Lenkgeber (15) mit einer Hydraulikeinrichtung gekoppelt ist und diese hydraulisch ansteuert;
- die Hydraulikeinrichtung dazu ausgebildet ist, die gewünschte Fahrtrichtung und/oder Lenkbewegung zu bewirken; und wobei
- die hydraulische Wirkung zwischen dem Lenkgeber (15) einerseits und der zugeordneten Hydraulikeinrichtung andererseits bei einem Verschwenken der Drehkonsole (11) zwischen Vorwärtsstellung und Rückwärtsstellung jeweils vertauscht wird.

7. Arbeitsfahrzeug nach einem der vorstehenden Ansprüche, wobei
- die Drehkonsole (11) den Fahrtrichtungsgeber (18) trägt, zum Vorgeben einer Fahrtrichtung und/oder einer Fahrgeschwindigkeit;
- der Fahrtrichtungsgeber (18) mit einer Steuerung verbunden ist, die eine Hydraulikeinrichtung ansteuert;
- die Steuerung im Zusammenwirken mit der Hydraulikeinrichtung dazu ausgebildet ist, die gewünschte Fahrtrichtung und/oder Fahrgeschwindigkeit zu bewirken; und wobei
- die hydraulische Wirkung zwischen dem Fahrtrichtungsgeber (18) einerseits und der zugeordneten Hydraulikeinrichtung andererseits bei einem Verschwenken der Drehkonsole (11) zwischen Vorwärtsstellung und Rückwärtsstellung jeweils vertauscht wird.

8. Arbeitsfahrzeug nach einem der vorstehenden Ansprüche, wobei eine Drehstellungs-Überwachungseinrichtung vorgesehen ist, zum Überwachen der Drehstellung der Drehkonsole (11) und Erzeugen eines von der Drehstellung abhängigen Signals.

9. Arbeitsfahrzeug nach einem der vorstehenden Ansprüche, wobei eine Verriegelungseinrichtung vorgesehen ist, zum Verriegeln der Position der Drehkonsole (11) jeweils in der Vorwärtsstellung und/oder in der Rückwärtsstellung.

10. Arbeitsfahrzeug nach einem der vorstehenden Ansprüche, wobei eine Lenkeinrichtung (5) vorgesehen ist, zum Erzeugen einer Stellkraft zwischen der Fahreinheit (1) und der Muldeneinheit (2), um die Fahreinheit (1) und die Muldeneinheit (2) relativ zueinander zu verschwenken.

11. Arbeitsfahrzeug nach einem der vorhergehenden Ansprüche, wobei die Fahreinheit (1) einen Motor (30) aufweist, der mittels Montagepunkten mit der Fahreinheit (1) verbunden ist, wobei mindestens ein Montagepunkt den Motor (30) mit einer Achse verbindet.

12. Arbeitsfahrzeug nach einem der vorhergehenden Ansprüche, wobei
- das Arbeitsfahrzeug eine Kabine (40) aufweist, die die Drehkonsole (11) umgibt;
- die Kabine (40) eine Vorderwand (41) und eine Rückwand sowie zwei Seitenwände (42) und ein Kabinendach (44) ausweist;
- die Vorderwand (41) und die Rückwand jeweils in zwei wählbare Fahrtrichtungen ausgerichtet sind;
- mindestens eine der Seitenwände (42) eine Tür (43) aufweist, durch welche die Drehkonsole (11) für einen Bediener zugänglich ist, wobei die Drehkonsole (11) bei geschlossener Tür (43) zwischen der Vorwärtsstellung und der Rückwärtsstellung verschwenkbar ist.

13. Arbeitsfahrzeug nach Anspruch 12, wobei eine der Seitenwände (42) mindestens zwei Wandelementen (45) aufweist, die in einem eingeschlossenen Winkel von <180° angeordnet sind, insbesondere in einem eingeschlossenen Winkel in einem Bereich von >160° und <180°, insbesondere in einem eingeschlossenen Winkel in einem Bereich von >170° und <180°, und wobei eines der Wandelemente von der Tür (43) gebildet ist.

14. Arbeitsfahrzeug nach einem der vorhergehenden Ansprüche, wobei die Fahreinheit (1) eine Höhe aufweist, die von einem Boden, auf dem das Arbeitsfahrzeug in unbeladenem betriebsbereiten Zustand steht, bis zu einer Bodenfläche eines Fahrerarbeitsplatzes bemessen ist, und ein Reifen der Fahreinheit einen Durchmesser aufweist, derart, dass das Verhältnis der Höhe der Fahreinheit zum Durchmesser des Reifens in einem Bereich von 1,4 bis 1,0, bevorzugt im Bereich von 1,3 bis 1,2 liegt.

## Claims

1. Working vehicle, comprising
- a driving unit (1) which has a drive and a driver seat (10);
- a skip unit (2) which has a skip (6) for receiving a load; and comprising
- an articulated joint (4), arranged between the driving unit (1) and the skip unit (2), for coupling the driving unit (1) to the skip unit (2) such that the driving unit (1) and the skip unit (2) can be moved relative to one another about at least one vertical axis (Z) of the working vehicle; wherein
- the driving unit (1) has a rotating console (11) provided thereon which supports the driver seat (10) and which can be pivoted relative to the remaining driving unit (1) about a vertical axis between a forwards position and a rearwards position;
**characterised in that**
- the rotating console (11) supports, as components, the driver seat (10), a dash panel (16), a steering wheel (15), a travel direction transmitter (18), a brake transmitter (17), a driving speed transmitter (17) and an operating element (18) for operating the skip (6) such that the spatial allocation of these components with respect to one another remains unchanged when the rotating console (11) is pivoted.

2. Working vehicle as claimed in claim 1, wherein the rotating console (11) also supports at least one of the following components:
- operating elements for activating functions of the working vehicle
- display devices
- start lock.

3. Working vehicle as claimed in claim 1 or 2, wherein the travel direction transmitter and/or the brake transmitter each have a pedal (17) which can be pivoted relative to the rotating console (11) about a pivot axis, wherein the pivot axis is arranged above a foot contact surface provided on the pedal (17) of the travel direction transmitter and/or on the pedal (17) of the brake transmitter.

4. Working vehicle as claimed in any one of the preceding claims, wherein a hydraulic support (19) is arranged on an underside of the rotating console (11) for supporting at least one of the following components:
- hydraulic line
- hydraulic hose (22)
- hydraulic screw connection (20)
- connecting screw connection for coupling two hydraulic lines
- brake master cylinder.

5. Working vehicle as claimed in claim 4, wherein
- the hydraulic support (19) supports at least one hydraulic hose (22);
and wherein
- a sliding plate (23) is provided in the driving unit (1) below the rotating console (11) and the at least one hydraulic hose (22) can be moved slidingly on said sliding plate when the rotating console (11) is pivoted.

6. Working vehicle as claimed in any one of the preceding claims, wherein
- the rotating console (11) supports a steering transmitter (15) for specifying a steering movement;
- the steering transmitter (15) is coupled to, and hydraulically activates, a hydraulic device;
- the hydraulic device is designed to produce the desired travel direction and/or steering movement; and wherein
- the hydraulic effect between the steering transmitter (15) on the one hand and the allocated hydraulic device on the other hand is interchanged in each case between forwards position and rearwards position when the rotating console (11) is pivoted.

7. Working vehicle as claimed in any one of the preceding claims, wherein
- the rotating console (11) supports the travel direction transmitter (18) for specifying a travel direction and/or a driving speed;
- the travel direction transmitter (18) is connected to a controller which activates a hydraulic device;
- the controller, in cooperation with the hydraulic device, is designed to produce the desired travel direction and/or driving speed; and wherein
- the hydraulic effect between the travel direction transmitter (18) on the one hand and the allocated hydraulic device on the other hand is interchanged in each case between forwards position and rearwards position when the rotating console (11) is pivoted.

8. Working vehicle as claimed in any one of the preceding claims, wherein a rotational position-monitoring device is provided for monitoring the rotational position of the rotating console (11) and generating a signal which is dependent upon the rotational position.

9. Working vehicle as claimed in any one of the preceding claims, wherein a locking device is provided for locking the position of the rotating console (11) in each case in the forwards position and/or in the rearwards position.

10. Working vehicle as claimed in any one of the preceding claims, wherein a steering device (5) is provided for generating an actuating force between the driving unit (1) and the skip unit (2) in order to pivot the driving unit (1) and the skip unit (2) relative to one another.

11. Working vehicle as claimed in any one of the preceding claims, wherein the driving unit (1) has a motor (30) which is connected to the driving unit (1) by means of mounting points, wherein at least one mounting point connects the motor (30) to an axle.

12. Working vehicle as claimed in any one of the preceding claims, wherein
- the working vehicle has a cab (40) which surrounds the rotating console (11);
- the cab (40) has a front wall (41) and a rear wall and two side walls (42) and a cab roof (44);
- the front wall (41) and the rear wall are each oriented in two selectable travel directions;
- at least one of the side walls (42) has a door (43), through which the rotating console (11) is accessible to an operator, wherein, when the door (43) is closed, the rotating console (11) can be pivoted between the forwards position and the rearwards position.

13. Working vehicle as claimed in claim 12, wherein one of the side walls (42) has at least two wall elements (45) which are arranged at an included angle of < 180°, in particular at an included angle in a range of > 160° and < 180°, in particular at an included angle in a range of > 170° and < 180°, and wherein one of the wall elements is formed by the door (43).

14. Working vehicle as claimed in any one of the preceding claims, wherein the driving unit (1) has a height which is dimensioned from a ground, on which the working vehicle stands in the unloaded, ready-to-operate state, to a ground surface of a driver workstation, and a tyre of the driving unit has a diameter such that the ratio of the height of the driving unit to the diameter of the tyre is in a range of 1.4 to 1.0, preferably in the range of 1.3 to 1.2.

## Revendications

1. Véhicule de travail avec
- une unité de déplacement (1), qui comprend un entraînement et un siège de conducteur (10) ;
- une unité de benne (2) qui comprend une benne (6) pour le logement d'une charge ; et avec
- une articulation (4) disposée entre l'unité de déplacement (1) et l'unité de benne (2) pour le couplage de l'unité de déplacement (1) avec l'unité de benne (2), de façon à ce que l'unité de déplacement (1) et l'unité de benne (2) puissent être déplacées l'une par rapport à l'autre autour d'au moins un axe vertical (Z) du véhicule de travail ; dans lequel
- sur l'unité de déplacement (1) est prévue une console rotative (11) qui supporte le siège du conducteur (10) et qui peut être pivotée par rapport au reste de l'unité de déplacement (1) autour d'un axe vertical entre une position vers l'avant et une position vers l'arrière ;
**caractérisé en ce que**
- la console rotative (11) supporte, en tant que composants, le siège du conducteur (10), un support d'armature (16), un volant (15), un transmetteur de direction de déplacement (18), un transmetteur de freinage (17), un transmetteur de vitesse de déplacement (17) et un élément de commande (18) pour la commande de la benne (6), de façon à ce que la disposition spatiale de ces composants les uns par rapport aux autres reste inchangée lors d'un pivotement de la console rotative (11).

2. Véhicule de travail selon la revendication 1, dans lequel la console rotative (11) supporte encore au moins un des composants suivants :
- éléments de commande pour le contrôle de fonctions du véhicule de travail
- dispositifs d'affichage
- verrou de démarrage.

3. Véhicule de travail selon la revendication 1 ou 2, dans lequel le transmetteur de direction de déplacement et/ou le transmetteur de freinage comprennent chacun une pédale (17) qui peut pivoter autour d'un axe de pivotement par rapport à la console rotative (11), dans lequel l'axe de pivotement est disposé au-dessus d'une surface de contact de pied prévue respectivement au niveau de la pédale (17) du transmetteur de direction de déplacement et/ou au niveau de la pédale (17) du transmetteur de freinage.

4. Véhicule de travail selon l'une des revendications précédentes, dans lequel, sur un côté inférieur de la console rotative (11) est disposé un support hydraulique (19), pour le support d'au moins un des composants suivants :
- conduite hydraulique
- tuyau hydraulique (22)
- vissage hydraulique (20)
- vissage de connexion pour le couplage de deux conduites hydrauliques
- vérin de transmetteur de freinage.

5. Véhicule de travail selon la revendication 4, dans lequel
- le support hydraulique (19) supporte au moins un tuyau hydraulique (22) ; et dans lequel
- dans l'unité de déplacement (1), en dessous de la console rotative (11), est prévue une plaque de glissement (23) sur laquelle l'au moins un tuyau hydraulique (22) peut être déplacé par glissement lors d'un pivotement de la console rotative (11).

6. Véhicule de travail selon l'une des revendications précédentes, dans lequel
- la console rotative (11) supporte un transmetteur de direction (15) pour la détermination d'un mouvement de direction :
- le transmetteur de direction (15) est couplé avec un dispositif hydraulique et contrôle celui-ci de manière hydraulique ;
- le dispositif hydraulique est conçu pour déterminer la direction de déplacement et/ou le mouvement direction souhaité ; et dans lequel
- l'action hydraulique entre le transmetteur de direction (15) d'une part et le dispositif hydraulique correspondant d'autre part est commutée, lors d'un pivotement de la console rotative (11), entre une position vers l'avant et une position vers l'arrière.

7. Véhicule de travail selon l'une des revendications précédentes, dans lequel
- la console rotative (11) supporte le transmetteur de direction de déplacement (18) pour la détermination d'une direction de déplacement et/ou d'une vitesse de déplacement ;
- le transmetteur de direction de déplacement (18) est relié avec une commande qui contrôle un dispositif hydraulique ;
- la commande en interaction avec le dispositif hydraulique est conçue pour déterminer la direction de déplacement et/ou la vitesse de déplacement souhaitée ; et dans lequel
- l'action hydraulique entre le transmetteur de direction de déplacement (18) d'une part et le dispositif hydraulique correspondant d'autre part est commutée, lors d'un pivotement de la console rotative (11), entre une position vers l'avant et une position vers l'arrière.

8. Véhicule de travail selon l'une des revendications précédentes, dans lequel un dispositif de surveillance de position de rotation est prévue, pour la surveillance de la position de rotation de la console rotative (11) et pour la génération d'un signal dépendant de la position de rotation.

9. Véhicule de travail selon l'une des revendications précédentes, dans lequel un dispositif de verrouillage est prévu, pour le verrouillage de la position de la console rotative (11) respectivement dans la position vers l'avant et/ou dans la position vers l'arrière.

10. Véhicule de travail selon l'une des revendications précédentes, dans lequel un dispositif de direction (5) est prévu, pour la génération d'une force de réglage entre l'unité de déplacement (1) et l'unité de benne (2), afin de faire pivoter l'unité de déplacement (1) et l'unité de benne (2) l'une par rapport à l'autre.

11. Véhicule de travail selon l'une des revendications précédentes, dans lequel l'unité de déplacement (1) comprend un moteur (30) qui est relié au moyen de points de montage avec l'unité de déplacement (1), dans lequel au moins un point de montage relie le moteur (30) avec un axe.

12. Véhicule de travail selon l'une des revendications précédentes, dans lequel
- le véhicule de travail comprend une cabine (40) qui entoure la console rotative (11) ;
- la cabine (40) comprend une paroi avant (41) et une paroi arrière ainsi que deux parois latérales (42) et un toit de cabine (44) ;
- la paroi avant (41) et la paroi arrière sont orientées respectivement dans deux directions de déplacement sélectionnables ;
- au moins une des parois latérales (42) comprend une porte (43) à travers laquelle la console rotative (11) est accessible à un opérateur, dans lequel la console rotative (11) peut être pivotée entre la position vers l'avant et la position vers l'arrière lorsque la porte (43) est fermée.

13. Véhicule de travail selon la revendication 12, dans lequel une des parois latérales (42) comprend au moins deux éléments de paroi (45) qui sont disposés à un angle inclus < 180°, plus particulièrement à un angle dans un intervalle > 160° et < 180°, plus particulièrement à un angle inclus dans un intervalle > 170° et < 180° et dans lequel un des éléments de paroi est constitué de la porte (43).

14. Véhicule de travail selon l'une des revendications précédentes, dans lequel l'unité de déplacement (1) présente une hauteur qui est mesurée d'un sol, sur lequel le véhicule de travail se trouve dans l'état non chargé et prêt à fonctionner, jusqu'à une surface de fond d'un poste de travail d'un conducteur et un pneu de l'unité de déplacement présente un diamètre tel qu'un rapport entre la hauteur de l'unité de déplacement et le diamètre du pneu se trouve dans un intervalle entre 1,4 et 1,0, de préférence dans un intervalle de 1,3 à 1,2.
